# DEMANDE DE BREVET EUROPEEN

(11) **EP 0 957 607 A1**
(43) Date de publication de la demande: **17.11.1999**
(21) Numéro de dépôt: 99401145.0
(22) Date de dépôt: 10.05.1999
(51) Int. Cl.: H04L 12/28, H04J 13/06

(54) **Installation et procédé de transmission de données à stations relais synchronisées**

(30) Priorité: 11.05.1998 FR 9805893
(71) Demandeur: INRIA INSTITUT NATIONAL DE RECHERCHE EN INFORMATIQUE ET EN AUTOMATIQUE, Rocquencourt F-78153 Le Chesnay (FR)
(72) Inventeur: Jacquet, Philippe, 78530 Buc (FR); Muhlethaler, Paul, 78600 Maisons-Laffitte (FR)
(74) Mandataire: Plaçais, Jean-Yves

(57) **Abrégé**

Des stations relais connexes d'un réseau comportent chacune un numéro de réseau, une horloge (4) définissant un temps de référence local, un module (3) d'émission/réception de messages sur une fréquence variant selon un schéma temporel choisi, défini relativement au temps de référence local, et un module (5) de gestion des messages. Le module de gestion d'une station relais synchronisante (SH) forme, en vue de leur émission, des messages de synchronisation qui comportent son numéro de réseau, une fréquence commune, son schéma d'évolution temporelle, et un temps de référence commun. De plus, chaque station relais (SH) comporte un module de synchronisation (7) capable d'extraire les informations contenues dans un message de synchronisation reçu portant un numéro de réseau commun, pour, d'une part, recaler le temps de référence local, défini par l'horloge (4), sur le temps de référence commun, et d'autre part, fournir au module d'émission/réception (3) la fréquence commune extraite et son schéma temporel, de sorte que la station relais soit synchronisée en fréquence avec la station synchronisante et devienne à son tour station synchronisante.

## Description

L'invention concerne le domaine des installations informatiques permettant des échanges de données, ou messages, entre des postes ou stations d'un ou plusieurs réseaux.

On prévoit parfois dans ces installations des stations relais munies d'un numéro de réseau et comprenant, notamment, une horloge qui définit un temps de référence local, un module destiné à émettre/recevoir des messages sur une fréquence qui varie selon un schéma temporel choisi (les schémas peuvent éventuellement varier d'une station à l'autre), défini relativement au temps de référence local, et un module de gestion qui forme les messages à émettre et traite les messages reçus, en vue par exemple de les relayer vers d'autres stations.

Certaines installations comportent des stations relais de ce type dites "à fréquence variable", destinées, notamment, à relayer des messages vers d'autres stations relais ou non. De telles stations relais peuvent, par exemple, être des points d'accès (ou des ponts) d'un réseau filaire permettant l'échange de messages entre des stations du réseau filaire et des stations mobiles d'un réseau radio sans fil. Dans cet exemple, chaque station relais peut communiquer avec plusieurs stations "non relais" avec lesquelles elle forme une cellule. Un réseau peut donc être décomposé en plusieurs cellules qui communiquent par l'intermédiaire de leurs stations relais respectives.

Du fait que les stations relais possèdent des horloges personnelles non synchronisées, elles présentent l'inconvénient d'être indépendantes les unes des autres. En effet, que leurs schémas respectifs d'évolution temporelle soient identiques ou non, certains d'entre eux peuvent se trouver décalés temporellement, si bien que la fréquence sur laquelle émet à un instant donné l'une des stations relais n'est pas la fréquence sur laquelle reçoit une autre station relais à ce même instant.

Il en résulte qu'une transmission entre des cellules différentes est impossible tant qu'il n'y a pas eu d'accord fréquentiel entre ces cellules. Cette impossibilité durera, en moyenne, d'autant plus longtemps que le nombre de relais nécessaire à la transmission sera important, étant donné qu'à chaque relais un accord fréquentiel doit être trouvé.

L'invention a donc pour but de procurer une installation de transmission de données, et le procédé correspondant, qui ne présentent pas l'inconvénient précité.

Elle propose à cet effet une installation du type décrit dans l'introduction, dans laquelle :
- d'une part, le module de gestion de chaque station relais placée dans un état choisi est agencé pour former des messages de synchronisation comportant son numéro de réseau et des informations relatives à cet état choisi et destinés à certaines autres stations relais au moins, l'une au moins des stations relais, que l'on appellera par la suite "station maître", présentant un module de gestion vérifiant en permanence ce critère choisi, et
- d'autre part, chaque station relais (aussi bien la station maître que les autres stations que l'on appellera par la suite "station esclave") comporte un module de synchronisation capable, à réception d'un message de synchronisation contenant le même numéro de réseau que le sien, d'en extraire les informations d'état pour placer sa station relais dans l'état choisi.

Selon une autre caractéristique de l'invention, les informations relatives à l'état choisi, lesquelles sont contenues dans les messages de synchronisation, comportent au moins des informations relatives à un temps de référence commun et à une fréquence commune, et notamment représentatives du schéma temporel de cette fréquence commune.

Dans ce cas, chaque module de synchronisation est agencé pour extraire d'un message de synchronisation, reçu par le module d'émission/réception qui lui est associé dans la station relais, les informations relatives à la fréquence commune et au temps de référence commun, puis, d'une part, à caler le temps de référence local, défini par l'horloge locale, sur le temps de référence commun, et d'autre part, à fournir au module d'émission/réception les informations relatives à la fréquence commune. La station relais est alors considérée comme placée dans l'état choisi lorsque, d'une part, son temps de référence local est le temps de référence commun, et d'autre part, son module d'émission/réception est prêt à émettre/recevoir des messages sur la fréquence commune variant selon le schéma temporel de cette dernière.

Par définition, on appellera station synchronisée une station placée dans l'état choisi, c'est à dire qui a été synchronisée sur le temps de référence commun reçu d'une station synchronisante qui pourra être une station maître, ou bien une station esclave venant d'être synchronisée et qui relaye (ou diffuse) le message de synchronisation initial. En d'autres termes, une station maître est forcément une station synchronisante, tandis qu'une station esclave ne peut être considérée comme une station synchronisante qu'une fois synchronisée.

Ainsi, grâce à une station synchronisante selon l'invention, il est possible de transformer plusieurs cellules indépendantes les unes des autres en une super-cellule formant un réseau global dans lequel les messages peuvent transiter d'une cellule à l'autre (ou éventuellement d'un segment d'un premier réseau à un segment d'un second réseau).

Il pourra s'agir de segments (ou cellules) de réseaux radio ou bien de segments de réseaux radio et filaire(s), dont les formats seront de préférence choisis, pour les réseaux radio, parmi au moins les formats des normes "HIPERLAN" et IEEE 802.11, et pour les réseaux filaires, parmi au moins les standards ISO pour les normes IEEE 802.3, 802.5 et 802.14.

Le format HIPERLAN est notamment décrit dans les publications de l'Institut européen de standardisation (ETSI) et plus particulièrement dans le "Technical Standard ETS-300-652".

Dans le cas de la norme IEEE 802.11, l'invention permet de synchroniser des points d'accès ("Access Point AP") entre eux,de sorte qu'ils pourront utiliser l'interface radio comme système de distribution ("Distribution System DS") pour communiquer entre eux. L'invention va donc permettre d'obtenir des réseaux radio étendus ("Extended Service Set ESS") utilisant uniquement des interfaces radio.

Par ailleurs, l'installation est particulièrement adaptée aux réseaux dits "à saut de fréquence" ou "à étalement de spectre à séquence directe", bien connus de l'homme de l'art.

Selon encore une autre caractéristique de l'invention, les stations relais maître (ou synchronisante) et esclaves sont, de préférence, connexes entre elles, c'est à dire qu'il existe entre deux stations arbitraires un chemin formé par des stations à portée radio.

La fréquence commune, son schéma d'évolution temporelle et le temps de référence commun sont de préférence les propres paramètres locaux de la station synchronisante (ou maître). Mais bien entendu, il pourrait s'agir de paramètres partiellement ou totalement différents.

Avantageusement, les informations contenues dans le message de synchronisation et relatives à la fréquence commune comprennent la liste des fréquences et les durées de séjour respectives de ces fréquences ou bien un identifiant de la liste des fréquences de son schéma d'évolution et des durées de séjour respectives de ces fréquences.

Selon encore une autre caractéristique de l'invention, chaque station synchronisante peut placer dans le message de synchronisation un identificateur destiné à signaler aux stations relais esclaves, et éventuellement à d'autres stations synchronisantes, destinataires, le type du message qu'elle leur transmet, c'est à dire le fait qu'il s'agit d'un message de synchronisation. Afin de tirer partie de cette information, chaque module d'émission/réception est capable de détecter la présence de l'identificateur de sorte que seuls les messages de synchronisation qui le contiennent soient directement transmis au module de synchronisation en vue de l'extraction des informations qu'ils contiennent.

Dans un mode de réalisation particulièrement intéressant, les modules d'émission/réception des stations relais esclaves, au moins, sont agencés pour se caler successivement sur les différentes fréquences prévues par leurs schémas d'évolution temporelle respectifs, pendant des durées prédéterminées, de façon à pouvoir capter un éventuel message de synchronisation issu de la station synchronisante (maître ou bien esclave synchronisé).

De préférence, ces opérations de calages successifs sur des fréquences différentes (ou balayage) s'effectue lors de la mise en fonctionnement de la station concernée, ou bien après chaque modification survenue au niveau d'une station, portant par exemple sur son schéma d'évolution temporelle ou sur son numéro de réseau lorsqu'il existe.

Selon encore une autre caractéristique de l'invention, lorsque l'installation a pour objet de relier, ne serait-ce que momentanément, des réseaux différents entre eux, il est avantageux qu'elle puisse attribuer à ses différentes stations relais maître(s) et esclaves, par exemple lors de leurs mises en fonctionnement respectives, leurs numéros de réseau.

Dans cette hypothèse, il est avantageux que chaque module d'émission/réception soit agencé pour détecter le numéro de réseau contenu dans un message de synchronisation de sorte que seuls les messages de synchronisation qui contiennent un numéro de réseau identique à celui détecté soient directement transmis au module de synchronisation en vue de l'extraction des informations qu'ils contiennent. Tous les autres messages de synchronisation peuvent ainsi être écartés sans autre traitement, ce qui permet de libérer la station relais pour d'autres tâches.

De préférence, l'émission des messages de synchronisation est spontanée, et encore plus préférentiellement périodique. En effet, une fois connu le schéma d'évolution temporelle de la fréquence commune, soit la station relais concernée demeure synchrone avec les autres stations synchronisées, et par conséquent il n'y a plus de problème, soit les horloges des stations synchronisées dérivent entre elles. La transmission spontanée et périodique de trames de synchronisation est par conséquent particulièrement intéressante du fait qu'elle permet de garder la synchronisation entre les stations synchronisées et qu'elle optimise également la durée de synchronisation pour une nouvelle station.

Dans le cas évoqué ci-dessus, il est avantageux que le module de synchronisation de chaque station relais synchronisée, maître comme esclave, soit capable, lorsqu'un message de synchronisation est reçu d'une station relais, d'une part, de comparer son propre temps de référence local au temps de référence commun qui est contenu dans ce message, et d'autre part, de recaler automatiquement son temps de référence local sur le temps de référence commun si le premier est en retard sur le second.

Selon encore une autre caractéristique de l'invention, les modules de gestion des stations relais esclaves sont agencés pour former des messages d'interrogation comportant au moins leur numéro de réseau et requérant l'envoi d'un message de synchronisation par la station synchronisante (maître ou bien esclave synchronisée). Il est clair que cela nécessite que le module de gestion de la station maître et des stations esclaves soit agencé pour traiter de tels messages d'interrogation et former en retour un message de synchronisation comprenant le numéro de réseau de la station relais esclave émettrice, en vue de son émission vers celle-ci. Un tel message peut également être accompagné de l'identifiant de la station demanderesse.

D'autres options peuvent également être envisagées seules ou en combinaison :
- la station synchronisante (maître) pourra être agencée pour placer dans le message de synchronisation une information spécifiant qu'elle est effectivement la station synchronisante placée en permanence dans l'état choisi;
- l'installation pourra comprendre des moyens de désignation capables de définir le statut des différentes stations relais, à savoir station maître (ou synchronisante initialement) ou station relais esclave. Dans cette hypothèse, les moyens de désignation pourront être capables de désigner une station relais esclave comme station synchronisante auxiliaire placée dans l'état choisi, de sorte qu'elle puisse remplacer la station synchronisante (ou maître) en cas de panne.
   * Cette désignation s'effectuera de préférence lors de la mise en fonctionnement de la station relais concernée.
   * Le remplacement pourra être automatique en cas d'absence de message de synchronisation en provenance d'une station synchronisante (ou maître) pendant une durée supérieure à un seuil choisi.
   * En variante, le remplacement pourra être décidé par les moyens de désignation, en cas d'absence de message de synchronisation en provenance d'une station synchronisante pendant une durée supérieure à un seuil choisi. Dans ce cas, la station synchronisante auxiliaire sera capable, de préférence, de former et émettre les messages de synchronisation dès sa désignation;
- la station maître (ou synchronisante) et les stations esclaves synchronisées pourront être agencées pour placer dans le message de synchronisation des données complémentaires choisies.

L'invention propose également un procédé de transmission de messages (ou données) entre des stations relais maître(s) et esclaves du type de celles décrites ci-avant, comportant les étapes suivantes :
1) attribuer à chaque station un temps de référence local,
2) rapporter le schéma temporel de chaque station à son temps de référence local, et appliquer ce schéma temporel à l'émission/réception de cette station,
le procédé étant remarquable en ce qu'il comprend en outre les étapes suivantes :
3) former en une station relais placée dans un état choisi un message de synchronisation comportant des informations relatives à une fréquence commune, et notamment représentatives de son schéma temporel, et d'un temps de référence commun, et éventuellement un identificateur de réseau,
4) procéder à l'émission par cette station, en direction d'au moins une station relais réceptrice, du message de synchronisation,
5) extraire dans la station réceptrice les informations relatives à la fréquence commune, contenues dans le message de synchronisation,
6) caler le temps de référence local de cette station réceptrice sur le temps de référence commun et appliquer le schéma temporel de la fréquence commune à l'émission/réception de la station réceptrice, de manière à placer ladite station réceptrice dans l'état choisi, et
8) autoriser la station réceptrice placée dans l'état choisi à réitérer les étapes 3) et 4).

Ce procédé peut également comprendre des étapes complémentaires, comme notamment celles dans lesquelles les stations relais émettent des messages d'interrogation lorsqu'elles n'ont pas reçu de message de synchronisation pendant des durées prédéterminées.

D'autres caractéristiques et avantages de l'invention apparaîtront à l'examen de la description détaillée ci-après, et des dessins annexés, sur lesquels :
- la figure 1 est un schéma très simplifié d'une installation mixte à réseaux radio et filaire selon l'invention;
- la figure 2 est un schéma très simplifié illustrant une station relais;
- la figure 3 est un diagramme illustrant un exemple de schéma d'évolution temporelle de la fréquence, dans un cas dit "à saut de fréquence";
- la figure 4 illustre un exemple de format de message de synchronisation;
- la figure 5 est un diagramme bloc de principe illustrant les principales étapes de recherche de synchronisation passive;
- la figure 6 illustre un exemple de format de message d'interrogation;
- la figure 7 est un diagramme bloc de principe illustrant les principales étapes de recherche de synchronisation active;
- la figure 8 est un diagramme bloc de principe illustrant l'organisation des tâches dans une station relais maître; et
- la figure 9 est un diagramme bloc de principe illustrant l'organisation des tâches dans une station relais esclave.

Les dessins annexés sont, pour l'essentiel, de caractère certain. En conséquence, ils pourront non seulement servir à compléter celle-ci, mais aussi contribuer à la définition de l'invention le cas échéant.

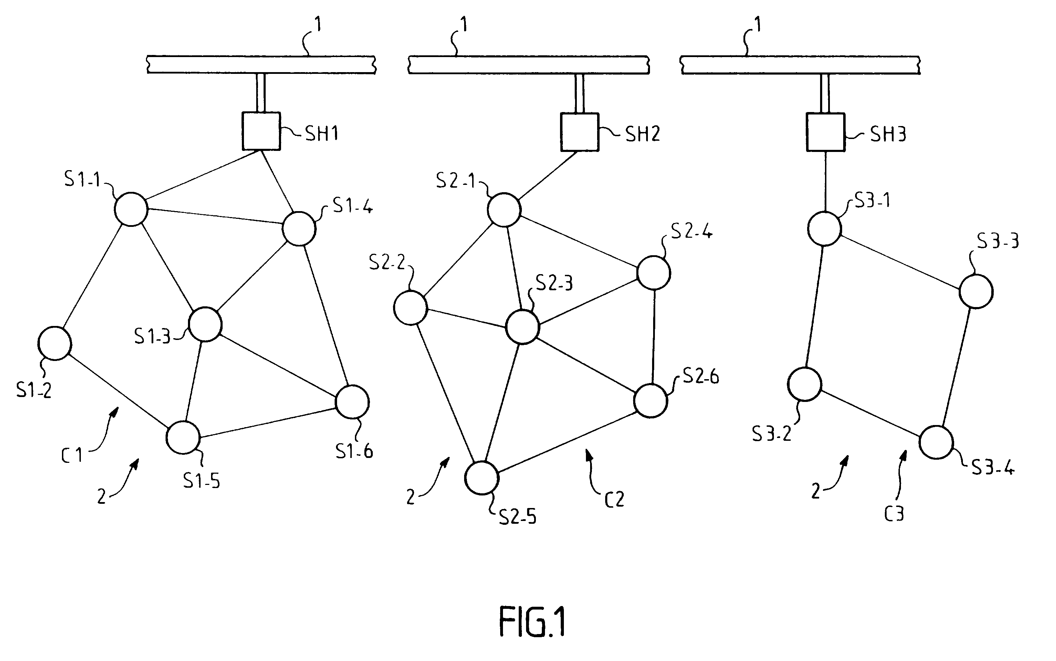

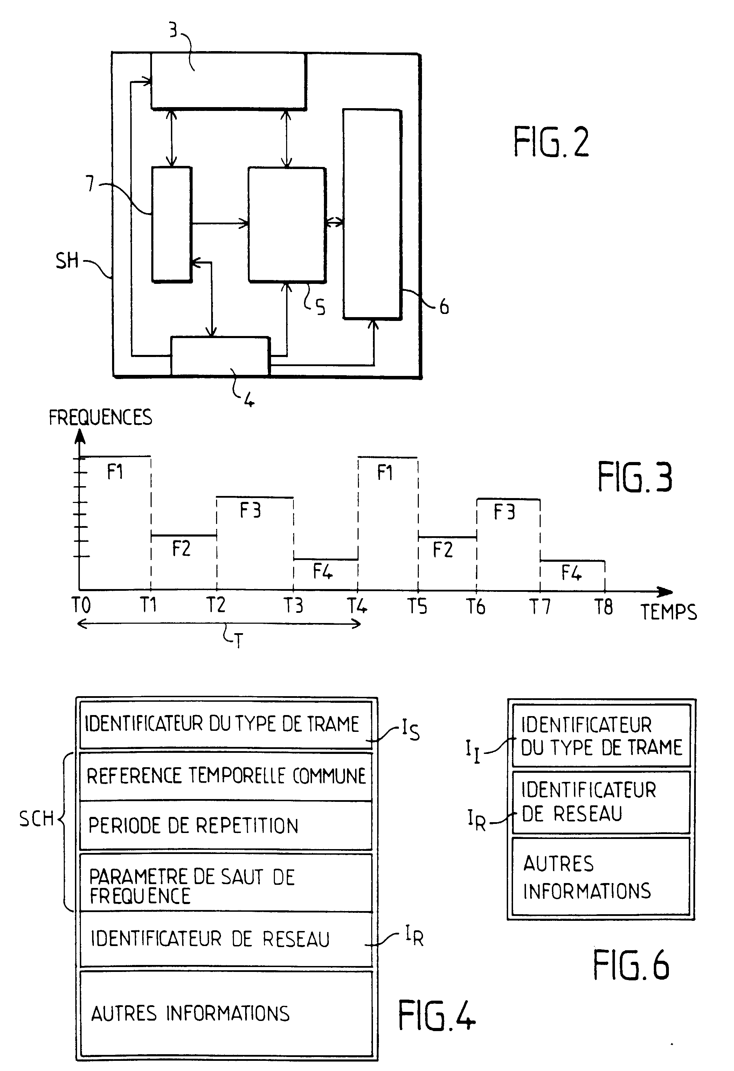

On se réfère tout d'abord aux figures 1 et 2 pour décrire un exemple d'installation de transmission de données (ou messages, ou encore trames) selon l'invention. Dans cet exemple, l'installation est de type mixte dans la mesure où elle comprend une partie sous forme de réseau filaire 1 (matérialisée par des doubles traits) et une partie sous forme de réseau radio 2 (où les liaisons entre stations Sj-i (j=1 à 3; i=1 à 5) sont matérialisées par des traits simples).

En fait, le réseau radio 2 est ici subdivisé en cellules Cj qui regroupent chacune plusieurs stations mobiles Sj-i qui peuvent échanger des messages avec le réseau filaire 1 via des stations hybrides SHj (raccordées physiquement audit réseau filaire).

Le demandeur a décrit dans une précédente demande de Brevet FR 9715870 du 15 décembre 1997, une telle installation munie de stations hybrides capables de gérer les échanges de données entre deux types de réseaux radio et/ou filaire, dont les messages (ou trames) ne présentent pas les mêmes formats.

Dans le contexte de la norme IEEE 802.11, où une station hybride SHj est identifiée à un point d'accès ("Access Point" selon la terminologie de cette norme), les stations Sj-i du réseau radio échangent des messages de service qui permettent aux points d'accès d'acquérir des informations topologiques sur l'ensemble des stations mobiles et des stations hybrides, de façon à permettre la gestion efficace de la distribution des messages de tout type. Une station peut ainsi savoir quelle(s) station(s) l'entend et de quelle(s) station(s) elle est entendue et déterminer un cheminement préférentiel entre des relais de transmission permettant à un message d'atteindre rapidement sa destination. Ce type d'installation a été décrit, notamment, par le demandeur dans ses demandes de brevet FR 9204032 et FR 9509928.

Les stations hybrides et mobiles d'une même cellule sont dites "à portée", dans la mesure où une transmission de message entre deux d'entre elles s'effectue par des sauts de proche en proche. Chaque cellule forme ainsi un réseau connexe.

Lorsque un message doit être transféré d'une station mobile d'une première cellule à une autre station mobile d'une seconde cellule, deux possibilités sont envisageables. Soit on utilise le réseau filaire momentanément, comme indiqué dans la demande de brevet FR 9715870 du 15 décembre 1997, en passant par les stations hybrides qui servent alors de relais, soit on utilise le seul réseau radio en utilisant des stations mobiles "relais" appartenant à différentes cellules. Le choix s'effectue par consultation des informations, notamment topologiques, données par les messages de service précités. On entend ici par relais un noeud de communication.

Cependant, dans ce type d'installation, les stations relais mobiles et hybrides ont un mode de fonctionnement particulier. Elles émettent et reçoivent sur des fréquences qui varient avec le temps. En d'autres termes, chaque station relais fonctionne selon un schéma d'évolution temporelle de fréquence qui lui est propre. Dans un même réseau, toutes les stations possèdent de préférence le même schéma. Le problème est que les horloges internes locales de chaque station sont indépendantes les unes des autres, si bien que les fréquences d'émission/réception des différentes stations sont rarement synchronisées. Cette désynchronisation interdit momentanément les échanges de messages.

L'invention a donc pour objet de permettre une communication efficace entre les cellules Cj d'un ou plusieurs réseaux.

Pour ce faire, l'invention comprend des stations SHj ou Sj-i relais du type de celle illustrée, de façon très schématique, sur la figure 2.

Chaque station relais SHj ou Sj-i comprend tout d'abord un module d'émission/réception 3 capable d'émettre et de recevoir des messages (ou trames), et plus généralement des données, selon un format propre au réseau auquel il appartient, et selon une fréquence qui varie temporellement selon un schéma choisi. Dans ce qui suit, on considérera que le schéma est du type dit "à saut de fréquence", comme illustré sur la figure 3. Bien entendu, il pourrait s'agir d'autres types de schéma d'évolution, comme par exemple celui du type dit "à étalement de spectre à séquence directe", notamment. Les stations SHj comportent, en plus de l'interface radio, une interface avec le réseau filaire.

Dans l'exemple illustré sur la figure 3, le module d'émission/réception 3 est agencé pour travailler suivant quatre fréquences différentes successives, notées F1 à F4. En d'autres termes, le module d'émission/réception 3 est calé pendant un premier intervalle de temps compris entre T0 et T1 sur la fréquence (ou canal) F1, puis dans un second intervalle de temps compris entre T1 et T2 sur la fréquence F2, puis pendant un troisième intervalle de temps compris entre T2 et T3 sur la fréquence F3, et enfin pendant un quatrième intervalle de temps compris entre T3 et T4 sur la fréquence F4. Du fait que dans cet exemple l'évolution temporelle de la fréquence est périodique, après une période T comprise entre T0 et T4, un nouveau cycle de saut de fréquence recommence à partir de la première fréquence F1 entre les instants T4 et T8, et ainsi de suite.

Un schéma temporel comprend donc la désignation de plusieurs fréquences différentes, la durée (de calage) pendant laquelle la station relais doit fonctionner sur chacune de ces fréquences, ainsi que l'ordre d'apparition de ces différentes fréquences.

Le début d'un cycle de période T sert de référence absolue. Cependant, connaissant le schéma d'une station relais SH donnée, on peut prévoir l'évolution de sa fréquence d'émission/réception à chaque instant, et rapporter la référence "absolue" à une référence relative.

Afin de fournir au module d'émission/réception 3 ces références temporelles ou bases de temps, chaque station relais comprend une horloge 4. Grâce à chaque horloge 4, on définit en chaque station relais un temps de référence local, les temps de référence locaux des différentes stations relais étant généralement différents les uns des autres par rapport à une référence de temps absolue.

Chaque station relais comprend également un module de gestion 5 capable de traiter les informations contenues dans des messages reçus, ainsi que de former des messages en vue de leur émission par le module d'émission/réception 3. Certains messages peuvent être formés directement au niveau des moyens de gestion 5. Cependant, d'autres messages peuvent être issus d'un niveau supérieur (ou couche supérieure) 6.

Selon l'invention, au moins l'une des stations relais, par exemple SH1, est désignée par l'installation comme station "maître". Toutes les autres stations relais peuvent alors être qualifiées de stations "esclaves". Bien entendu, on peut prévoir plusieurs stations maîtres si la configuration de l'installation l'impose. Par ailleurs, chaque station relais comporte un identificateur de réseau I_{R} qui spécifie le numéro du réseau auquel appartient la station relais, ou bien le numéro de la cellule à laquelle elle appartient.

Le module de gestion 5 de la station maître SH1 est considéré par l'installation comme étant capable de former en permanence des messages particuliers dits "messages de synchronisation". De tels messages de synchronisation comportent le numéro de réseau de la station et des informations relatives à une fréquence commune, au schéma d'évolution temporelle de cette fréquence commune et un temps de référence commun TC. Ces informations définissent l'état choisi.

La station maître est dite "synchronisante" (ou placée en permanence dans un état choisi) dans la mesure où elle est initialement celle qui peut émettre le premier message de synchronisation destiné à caler temporellement (ou synchroniser) les autres stations relais (éventuellement seulement certaines autres), qualifiées de stations esclaves.

De préférence, mais cela n'est pas nécessaire, un message de synchronisation (ou trame de synchronisation) comprend un identificateur I_{S} qui spécifie le type du message (ici message de synchronisation). On reviendra plus loin sur l'intérêt de placer cet identificateur I_{S} dans un message de synchronisation.

Un tel message (ou trame) de synchronisation est illustré sur la figure 4. En plus des deux identificateurs de message I_{S} et de numéro de réseau I_{R}, ce message comprend un schéma temporel noté SCH, qui comporte trois types d'informations, à savoir la référence temporelle commune (ou temps de référence commun), la période de répétition des différentes fréquences et les paramètres de sauts de fréquences, c'est-à-dire les différentes fréquences et leurs durées respectives.

Un message de synchronisation peut également comprendre d'autres informations (ou données complémentaires) comme par exemple le statut de la station émettrice, à savoir synchronisante (maître) ou synchronisée (esclave), et/ou un numéro de séquence.

Parmi ces autres informations, on pourrait également prévoir une donnée auxiliaire, par exemple un "drapeau" précisant si la station qui émet est bien dans l'état choisi, ou bien si elle est dans un autre état, que l'on peut qualifier de "provisoire". On entend par provisoire, l'état d'une station qui n'a pas été synchronisée depuis un temps de durée prédéterminée, ou bien qui pense qu'elle n'est pas dans l'état choisi.

Ce drapeau permettrait à des stations relais esclaves d'envoyer une synchronisation provisoire avant d'être placées dans l'état choisi, et par conséquent d'offrir aux autres stations une synchronisation provisoire avant de devenir réellement synchronisante (état choisi). Un tel drapeau peut donc permettre de signaler à une station si le message de synchronisation qu'elle reçoit lui apporte une synchronisation provisoire ou non.

De préférence, cette donnée auxiliaire (ou drapeau) est adjointe au message de synchronisation par le module de gestion 5 de la station émettrice, laquelle présente de plus un module de synchronisation capable d'extraire d'un message de synchronisation reçu la donnée auxiliaire et de décider de prendre en compte ce message en fonction de l'état que la donnée auxiliaire représente. Cela procure une fonction de filtrage.

Dans la suite de la description on considérera, par défaut, que les messages (ou trames) de synchronisation proviennent de stations dans l'état choisi.

La fréquence commune, son schéma temporel et le temps de référence commun peuvent être préalablement imposés, mais ils peuvent être également choisis parmi une sélection mémorisée dans une table. De préférence, ces paramètres sont ceux de la station maître, à savoir son temps de référence local, sa fréquence locale et son schéma d'évolution temporelle locale (bien qu'il soit envisageable de procéder autrement).

Le module de gestion 5 fournit au module d'émission/réception 3 les messages de synchronisation en vue de leur émission en direction des autres stations relais SH2 et SH3, ou bien en direction d'une sélection d'entre elles. Il est bien évident, que dans une variante, le module de gestion 5 pourrait ne fournir au module d'émission/réception 3 que les informations relatives à la fréquence commune accompagnée du temps de référence commun TC, c'est-à-dire les informations notées SCH sur la figure 4, le module d'émission/réception 3 y ajoutant un ou plusieurs identificateurs, du type de ceux décrits ci-avant I_{S} et I_{R}. En d'autres termes, dans cette variante, le message de synchronisation est mis en forme par le module d'émission/réception 3.

Afin que toutes les stations relais puissent extraire les informations contenues dans le message de synchronisation émis par la station maître SH1, elles comprennent un module de synchronisation 7 relié à l'horloge 4, au module d'émission/réception 3, ainsi qu'au module de gestion 5. Ce module de synchronisation 7 a pour fonction d'extraire d'un message de synchronisation, qui lui est transmis intégralement ou partiellement par le module d'émission/réception 3 l'ayant reçu, les informations relatives à la fréquence commune qu'il contient. Puis, d'une part, de recaler le temps de référence local qui est défini par l'horloge interne locale 4 sur le temps de référence commun TC contenu dans ledit message, et d'autre part, de fournir au module d'émission/réception 3 la fréquence commune et son schéma temporel.

En d'autres termes, cela revient à remplacer le temps de référence local par le temps de référence commun, ainsi que le schéma temporel local par le schéma temporel commun lorsque ces deux schémas sont différents.

Grâce à ce recalage fréquentiel et temporel, les stations esclaves peuvent être synchronisées sur la station maître. En d'autres termes elles sont désormais placées dans l'état choisi. Dans les instants suivant ce recalage les différentes stations relais synchronisées vont donc pouvoir relayer (ou diffuser) les messages de synchronisation qui leur parviendront et qui les concerneront. On peut alors considérer que les stations esclaves qui viennent d'être synchronisées deviennent à leur tour synchronisantes puisqu'elles sont placées dans l'état choisi.

Il est clair que, lorsque les deux schémas sont sensiblement différents, la synchronisation peut n'être effectuée que de façon passagère. Dans ce cas, le module d'émission/réception 3 est agencé pour mémoriser son schéma local et le schéma commun de manière à pouvoir fonctionner avec ledit schéma local initial au bout d'un temps prédéterminé ou bien après réception d'un message particulier suivant la réception du message de synchronisation.

A ce stade, on perçoit mieux l'intérêt de placer dans un message de synchronisation un identificateur de numéro de réseau I_{R}, puisque celui-ci va signaler à la station relais réceptrice si le message de synchronisation qu'elle vient de recevoir concerne, ou non, le réseau auquel elle appartient. Ainsi, si le message ne concerne pas son réseau, elle peut l'ignorer et devenir disponible pour une autre tâche.

De même, la présence d'un identificateur de type de message I_{S} permet, par exemple, au module d'émission/réception 3 d'une station relais réceptrice de délivrer ledit message directement au module de synchronisation 7, partiellement ou totalement, de sorte qu'il puisse en extraire les informations relatives au schéma SCH. Il est clair, que dans l'hypothèse où le message de synchronisation comporte d'autres informations que celles relatives au schéma, ces autres informations peuvent être soit directement transmises par le module d'émission/réception 3 au module de gestion 5, ou bien transmises par le module de synchronisation 7 au module de gestion 5, lequel peut éventuellement les transmettre à son tour à la couche supérieure 6 si celle-ci est le destinataire desdites informations.

Dans la mesure où les stations relais esclaves S1-i,SHj,Sj-i (quels que soient i et j) ne sont pas forcément calées sur la fréquence d'émission du message de synchronisation émis par la station maître SH1, et afin d'optimiser la synchronisation, le module d'émission/réception 3 de chaque station relais vient se caler pendant des durées prédéterminées successivement sur les différentes fréquences prévues par son schéma d'évolution temporelle local, dès la mise en fonctionnement de la station esclave qui le contient. De la sorte, il est possible de capter très rapidement un message de synchronisation, et par conséquent d'en extraire les différentes fréquences prévues par le schéma d'évolution temporelle commun qu'il comprend, et de les mémoriser. Le module d'émission/réception 3 n'aura plus qu'à "balayer" ses différentes fréquences communes lorsqu'il souhaitera se placer dans un mode d'écoute active des messages de synchronisation.

Il est possible que, si les cellules Cj sont disjointes du point de vue de la transmission radio, la synchronisation se propage par le réseau filaire pour gagner d'abord les stations hybrides SHj (j >= 2) puis les stations Sj-i (j >= 2, i quelconque) par l'intermédiaire de transmissions radio.

Bien entendu, dans l'hypothèse où les stations esclaves présentent le même schéma d'évolution temporelle local que le schéma d'évolution temporelle commun, il n'y a pas lieu de mémoriser les fréquences du message de synchronisation puisqu'elles sont identiques aux fréquences locales.

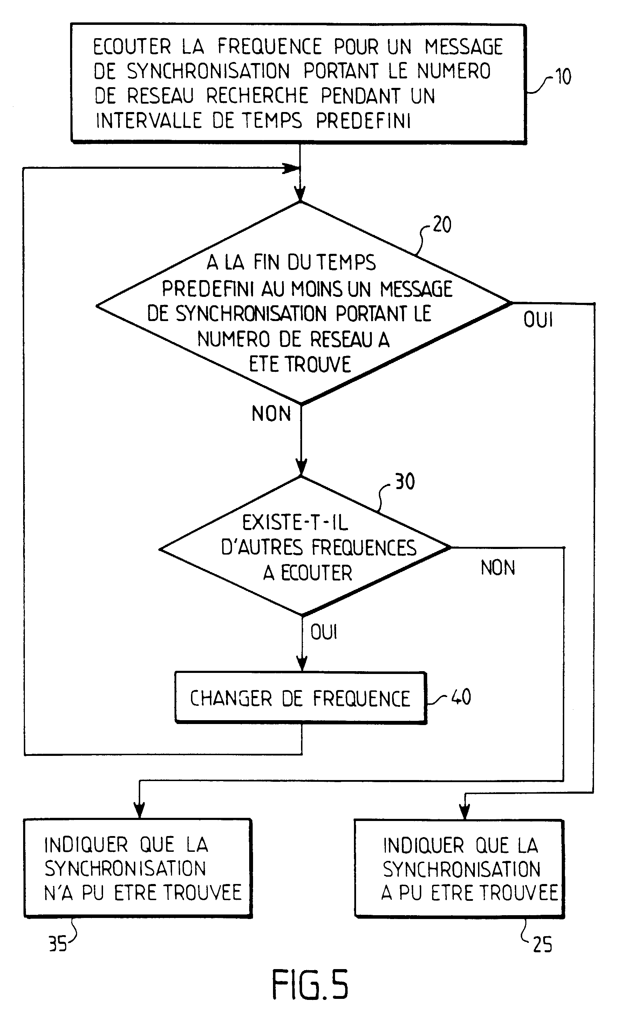

Sur la figure 5 se trouve illustrée une procédure d'écoute passive en vue de la capture de messages de synchronisation. On considère que dans cet exemple la station esclave réceptrice connaît déjà les différentes fréquences d'émission des messages de synchronisation. Bien entendu, dans le cas contraire, et comme indiqué ci-dessus, la station esclave va balayer préalablement les fréquences pour déterminer lesdites fréquences d'émission.

Cette procédure comprend tout d'abord une étape 10 dans laquelle le module d'émission/réception 3 se cale sur une première fréquence, et si celle-ci est la bonne, recherche dans le message de synchronisation, tout d'abord s'il contient l'identificateur de numéro de réseau I_{R}, puis l'identificateur de message de synchronisation I_{S}.

Dans une étape 20 le module d'émission/réception 3 effectue un premier test consistant, à la fin du temps prédéfini de calage sur la première fréquence, à vérifier si un message de synchronisation portant le numéro de réseau de la station esclave réceptrice a été trouvé. Si tel est le cas, la procédure de capture d'un message de synchronisation prend fin et, de préférence, lors d'une étape 25, le module d'émission/réception 3 indique à l'installation, par exemple à la station maître, que la synchronisation a été trouvée. En revanche, si à la fin du temps prédéfini de calage sur la première fréquence aucun message n'a été trouvé, alors le module d'émission/réception 3 effectue un second test dans une étape 30.

Ce second test 30 consiste à déterminer s'il existe d'autres fréquences sur lesquelles le module 3 doit se caler. En cas de réponse négative, le module d'émission/réception 3 met fin à la procédure d'écoute passive de message de synchronisation et, de préférence, lors d'une étape 35, indique à l'installation, par exemple à la station maître, que la synchronisation n'a pas pu être trouvée. En variante, en cas de non synchronisation, on pourrait reprendre complètement la procédure à l'étape 10.

En revanche si le résultat du test second 30 est positif, le module d'émission/réception 3 se cale sur une nouvelle fréquence (ou canal) ce qui constitue l'étape 40, puis il réitère l'étape 20, ainsi qu'éventuellement les étapes 30 et 40 jusqu'à ce que la synchronisation soit obtenue, par exemple.

De préférence, les durées de calage sur les différentes fréquences d'obtention du message de synchronisation sont beaucoup plus courtes que les durées habituelles de calage sur les fréquences d'émission/réception prévues par les schémas temporels locaux et communs. De telles durées sont typiquement de l'ordre de la centaine de milliseconde, de préférence.

L'installation peut comprendre un centre de gestion des stations relais maîtres et esclaves (centre de décision ou encore moyens de désignation) qui lui permet d'attribuer les numéros de réseaux ou de cellules, ainsi que de décider du statut des différentes stations relais, à savoir maîtres ou esclaves. Cette attribution de compétence (ou statut) des stations relais peut être effectuée lors de la première mise en fonctionnement de chacune des stations relais. Cependant, il est préférable que le centre de décision de l'installation puisse modifier le statut des stations relais selon les besoins, et surtout selon l'évolution des différentes cellules et/ou réseaux en fonction des contraintes géographiques et/ou climatiques, notamment.

De préférence, le centre de décision est également capable de désigner l'une des stations relais esclaves, comme station maître auxiliaire de sorte qu'en cas de dysfonctionnement de la station maître, cette station maître auxiliaire prenne le relais de cette dernière.

Dans cette configuration particulière, il est clair que la station maître auxiliaire doit présenter la même configuration que la station maître, c'est-à-dire qu'elle doit être capable de fournir aux différentes stations esclaves des messages de synchronisation qu'elle aura préalablement formés au niveau de son module de gestion 5.

Plus généralement, le traitement des situations de dysfonctionnement pourra s'effectuer de différentes manières, en fonction notamment du diagnostic porté sur ce dysfonctionnement. On donne ci-après quelques possibilités, à titre strictement non limitatif.

Dans les variantes où le centre de décision est capable de modifier, quand bon lui semble, le statut des stations relais, il est nécessaire que toutes les stations relais de l'installation soient constituées de la même façon, seuls leurs statuts respectifs différant à un instant donné. Elles doivent, par conséquent, être toutes capables en cas de modification de leur statut de former des messages de synchronisation à destination des autres stations relais.

Selon les variantes choisies pour l'installation, le changement de statut des stations relais peut être effectué de deux façons différentes.

En effet, lorsque les statuts des stations relais sont imposés lors de la mise en fonctionnement, et qu'il n'est pas possible ultérieurement de les modifier, une procédure particulière doit être mise en oeuvre de sorte que la station relais désignée initialement comme station maître auxiliaire soit capable de se substituer à la station maître qui ne fonctionne plus. Pour ce faire, le module de gestion 5 de la station maître auxiliaire peut en liaison avec son module d'émission/réception 3 et son horloge interne 4 changer automatiquement le statut de la station qui le comprend, par exemple lorsqu'aucun message de synchronisation n'a été reçu pendant une durée prédéterminée égale à un seuil temporel.

Dans le cas contraire, c'est-à-dire lorsque les statuts respectifs des différentes stations relais peuvent être modifiés à tout moment, il est préférable que ledit centre de décision effectue lui même une procédure de changement desdits statuts. Par exemple, en cas de non émission de message de synchronisation pendant une durée supérieure à un seuil choisi, le centre de décision peut désigner automatiquement l'une des stations relais esclaves comme station maître auxiliaire, ou bien directement comme nouvelle station maître. La désignation sous forme de station maître auxiliaire est préférable, dans la mesure où elle évite de modifier le statut de la station maître précédente qui peut présenter un dysfonctionnement momentané.

Pour des besoins de gestion du réseau, il peut être utile de scinder le réseau donc de changer les numéros de réseau de certaines stations et d'élire une (des) nouvelle(s) station(s) maître(s). Ceci peut être effectué par le centre de décision.

Par ailleurs, chaque station et donc en particulier le centre de décision peut disposer d'informations topologiques sur le réseau donc en particulier il lui est possible de connaître les stations qui lui sont reliées. Ceci peut servir par exemple pour diagnostiquer des problèmes éventuels de synchronisation. En effet une station qui n'est pas reliée ne peut être synchronisée. La panne est à rechercher sur cette station ou sur des stations voisines qui devraient être synchronisantes pour cette dernière station.

Comme déjà indiqué précédemment les stations relais esclaves sont capables une fois synchronisées sur la station maître (ou placées dans l'état choisi) de former elles-mêmes des répliques des messages de synchronisation reçus de cette station maître, pour les émettre en direction des autres stations relais esclaves.

L'envoi de messages de synchronisation peut être ponctuel, ou bien périodique. De même, il peut être spontané ou déclenché, si le besoin s'en fait sentir, selon les variantes d'installation.

Il est par ailleurs avantageux que les stations esclaves soient capables de requérir elles-même la synchronisation avec la station maître. Cela présente notamment un intérêt lorsqu'une station esclave est tombée en panne pendant une durée relativement longue par rapport à la fréquence d'émission des messages de synchronisation.

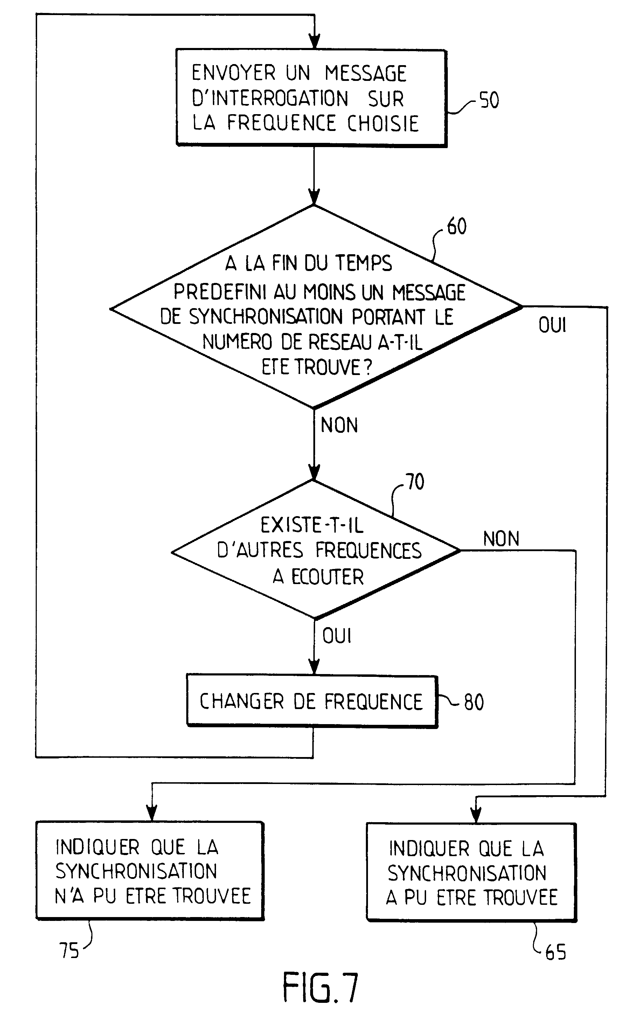

Pour ce faire, les stations relais, et plus particulièrement leurs modules de gestion 5, doivent être capables de former un message d'interrogation et de l'adresser via leur module d'émission/réception 3 en direction de la station maître. Le format d'un tel message d'interrogation est donné à titre d'exemple sur la figure 6. Il comprend au moins un identificateur du type de message I_{I}. De préférence, il est également accompagné d'un identificateur de numéro de réseau I_{R} de sorte que la station maître à réception de ce message d'interrogation inclue le même identificateur de numéro de réseau dans le message de synchronisation qu'elle adressera à la station émettrice du message d'interrogation en réponse à celui-ci. Cela est optionnel, mais permet d'accélérer la transmission du message de synchronisation, tout comme du message d'interrogation. Bien entendu, le message d'interrogation pourra comprendre d'autres types d'informations, comme par exemple l'identifiant de la station esclave émettrice.

Il est clair que la station maître et les stations synchronisantes doivent être capables de réceptionner de tels messages d'interrogation, et de former des messages de synchronisation en réponse à ceux-ci.

Le module d'émission/réception 3 de la station maître et des stations synchronisées est capable de détecter l'identificateur du type de message I_{I}, et de transmettre, si tel est le cas, un signal "codé" au module de gestion 5 de sorte qu'il forme un message de synchronisation que ledit module d'émission/réception 3 émettra alors en direction de la station esclave demanderesse. Il faut noter que dans les installations où se sont les modules d'émission/réception qui mettent en forme les messages, le signal codé suffit au module de gestion pour former le message de synchronisation qui sera alors mis en forme et adressé à la station demanderesse par le module d'émission/réception. Dans le cas contraire, le module d'émission/réception transmet le message d'interrogation au module de gestion qui lui fournit en retour un message de synchronisation prêt à être émis en direction de la station demanderesse.

Il est clair que dans les installations dans lesquelles le statut des stations relais peut évoluer au cours du temps, les modules d'émission/réception et les modules de gestion de toutes les stations relais, maîtres comme esclaves, doivent être capables de former des messages d'interrogation, et de détecter de tels messages.

Un exemple de procédure de recherche active de synchronisation est illustré sur la figure 7. Cette procédure comprend une étape 50 dans laquelle une station esclave demanderesse procède à l'émission d'un message d'interrogation sur une première fréquence choisie, qui est de préférence l'une des fréquences d'émission des messages de synchronisation d'une station synchronisante. Puis, dans une étape 60 la station esclave demanderesse procède à un premier test consistant, à la fin d'un temps prédéfini, à vérifier si un message de synchronisation portant son numéro de réseau a été reçu. Si le test est positif, c'est-à-dire si un message a été reçu, la procédure de recherche de message de synchronisation prend fin dans une étape 65, au cours de laquelle la station esclave demanderesse signale à l'installation, par exemple à la station maître, que la synchronisation a été trouvée.

En revanche, si le résultat du premier test 60 est négatif, alors la station esclave demanderesse effectue un second test 70 au cours duquel elle détermine si elle doit se caler sur d'autres fréquences non encore testées. Si le résultat de ce second test 70 est négatif, alors, dans une étape 75, la station esclave demanderesse indique à l'installation, par exemple à la station maître, que la synchronisation n'a pas pu être trouvée. Une telle indication peut, dans des variantes, déclencher l'émission automatique d'un message de synchronisation par la station maître.

En revanche, si le résultat du second test 70 est positif, c'est-à-dire si des fréquences n'ont pas encore été utilisées, le module d'émission/réception 3 procède dans une étape 80 au calage sur une nouvelle fréquence (ou canal), puis recommence l'étape 50 en envoyant un nouveau message d'interrogation sur la nouvelle fréquence choisie. L'étape 60 est alors de nouveau effectuée, ainsi qu'éventuellement les étapes 70 et 80, et ainsi de suite jusqu'à, soit l'étape 75, soit l'étape 65.

Il est clair qu'à réception d'un message de synchronisation, suite à une requête d'interrogation, la station esclave adopte les paramètres de synchronisation reçus.

L'installation selon l'invention peut également permettre, en option, une procédure de resynchronisation de l'ensemble des différentes stations relais, maître(s) comme esclaves.

Il est bien évident que pour les stations esclaves cette procédure de resynchronisation ne peut survenir qu'après une procédure de synchronisation préalable, active ou passive.

Cette procédure de resynchronisation consiste, à réception d'un message de synchronisation, émis par la station maître ou bien par une station esclave précédemment synchronisée sur la station maître, à comparer le temps de référence commun extrait du message de synchronisation reçu au temps de référence local défini par l'horloge. Puis, de préférence, lorsque ce temps de référence commun est supérieur au temps de référence local, à substituer le temps de référence local par le temps de référence commun extrait. Cela permet d'accélérer la synchronisation générale de toutes les stations relais de l'installation, ou au moins celles d'un même réseau ou d'une même cellule. Une telle resynchronisation est particulièrement utile lorsque, par exemple, les horloges internes locales de certaines stations relais dérivent.

Une telle procédure de resynchronisation peut également être envisagée en cas de réception par une station esclave d'un message de synchronisation émis par la station maître en réponse à un message d'interrogation émis par ladite station esclave.

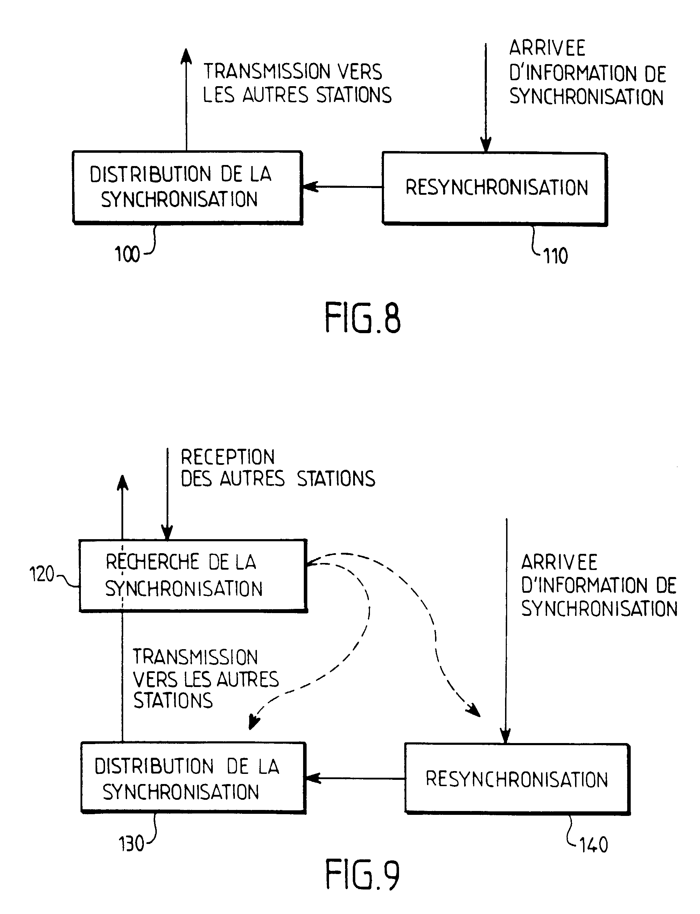

On a représenté sur les figures 8 et 9 les différentes tâches liées à la synchronisation, respectivement pour les stations maître(s) et pour les stations esclaves.

Comme illustré sur la figure 8, la station maître a pour tâche principale 100 de distribuer les messages de synchronisation aux autres stations relais. Cette tache 100 comprend aussi bien l'envoi spontané de messages de synchronisation que l'envoi de messages de synchronisation en réponse à un message d'interrogation. La station maître effectue également une tâche de resynchronisation interne 110, décrite précédemment, qu'elle effectue à réception de messages de synchronisation émis par les stations esclaves. Cette tâche de resynchronisation 110 influe sur les différentes tâches de synchronisation, dans la mesure où elle recale automatiquement le temps de référence local de la station maître et par conséquent le temps commun.

Comme cela est illustré sur la figure 9, les stations esclaves ont comme tâche prioritaire 120 la recherche de la synchronisation (puis la diffusion de celle-ci). Cette tâche 120 est activée dès la mise en fonctionnement de la station esclave concernée, ou bien en cas de changement de numéro de réseau ou de cellule, notamment. Elle consiste, notamment, en la recherche passive décrite précédemment en référence à la figure 5, ou en la recherche active décrite précédemment en référence à la figure 7.

La station esclave effectue une seconde tâche 130, du type de celle référencée 100 sur la figure 8, qui consiste à distribuer des messages de synchronisation après obtention d'une première synchronisation.

Enfin, la station esclave effectue une troisième tâche 140 qui consiste à resynchroniser son horloge interne en cas de réception d'informations de synchronisation d'autres stations relais, maître(s) comme esclaves, contenant un temps de référence en avance (ou supérieur) au temps de référence local. Il est clair que, comme pour la station maître, la tâche de resynchronisation 140 influe sur la tâche de distribution de la synchronisation 130.

La présence d'un identificateur de réseau et le fait que la station maître est à l'initiative de la synchronisation permet d'éviter l'émergence de composantes du réseau non synchronisées.

Une telle tache de resynchronisation peut, par exemple, être effectuée toutes les 500 millisecondes environ.

Les différents messages utilisés dans les procédures de synchronisation décrites ci-avant peuvent emprunter, selon le type d'installation, aussi bien le réseau filaire (ou câblé) que le réseau radio, selon les besoins, pourvu que l'installation-réseau reste connexe lorsque l'on tient compte de la couverture obtenue par les liaisons filaires et les liaisons radio. On entend ici par réseau filaire un réseau dans lequel les stations sont reliées par des câbles électriques ou des fibres optiques.

Par ailleurs, il faut noter que le maintien de la synchronisation entre des stations reliées par câble peut être utile dans le cas de la recherche de ce que l'homme de l'art appelle le roaming rapide.

L'invention s'applique tout particulièrement au réseau radio dont le format est choisi parmi la norme HIPERLAN et la norme IEEE802.11, notamment. La norme IEEE802.11 est tout particulièrement visée dans la mesure où elle peut utiliser un système de transmission à étalement de spectre et saut de fréquence.

Par ailleurs, dans le cas d'un réseau filaire, l'invention s'applique tout particulièrement au réseau dont le format est choisi parmi les standards ISO pour les normes IEEE802.3, 802.5 et 802.14.

Bien entendu, à l'aide de stations hybrides du type de celles évoquées précédemment, on peut envisager de véhiculer des messages de synchronisation par voie filaire, afin de relier des postes mobiles appartenant à des cellules éloignées. Cette possibilité permet d'accélérer la vitesse de transmission du message, du fait que les vitesses de transmission des réseaux filaires sont supérieures à celles des réseaux radio. Ces réseaux filaires servent alors de raccourcis. A noter également que, grâce à ces stations hybrides, il est possible de transmettre des messages de synchronisation entre des réseaux radio fonctionnant selon des fréquences (ou canaux) différents.

Par conséquent, par exemple, les stations (SH2,S2-i) pourront recevoir des messages de synchronisation par voie radio s'il existe un recouvrement entre la cellule couverte par les stations (SH1,S1-i) et la cellule recouverte par les stations (SH2,S2-i). Dans le cas contraire, elles pourront requérir une synchronisation par la voie du réseau câblé qui relie SH1 et SH2. SH2 pourra soit écouter les messages de synchronisation provenant de SH1 soit requérir directement des informations de synchronisation auprès de SH1 suivant des mécanismes similaires ceux décrits en référence aux figures 5 ou 7 avec la différence qu'étant sur le câble, il y a une seule fréquence à considérer. On pourra par exemple choisir que les stations hybrides SHj (j >= 2) se synchronisent de préférence sur la station hybride maître SH1 par l'intermédiaire du réseau filaire.

L'invention concerne également les procédés de transmission de données (ou messages) utilisant les stations relais décrites ci-avant, agencées pour émettre et recevoir sur des fréquences qui varient selon un schéma temporel choisi. Les procédés de transmission de messages selon l'invention comportent les étapes suivantes :
- dans une première étape on attribue à chaque station relais un temps de référence local,
- dans une seconde étape on rapporte le schéma temporel de chaque station à son temps de référence local, et on applique ce schéma temporel à l'émission/réception de cette station relais,
- dans une troisième étape on forme en une station relais placée dans un état choisi un message de synchronisation comportant des informations relatives à une fréquence commune, et notamment le schéma temporel de cette fréquence accompagné d'un temps de référence commun,
- dans une quatrième étape, on fait émettre par cette station, en direction des stations relais réceptrices, dites "esclaves", le message de synchronisation formé lors de la troisième étape,
- dans une cinquième étape, on extrait du message de synchronisation reçu par la station réceptrice, les informations relatives à la fréquence commune,
- dans une sixième étape, on procède au recalage du temps de référence local de la station relais réceptrice sur le temps de référence commun qui a été extrait du message de synchronisation, et on applique le schéma temporel de la fréquence commune ainsi extrait à l'émission/réception de la station réceptrice, de manière à placer ladite station réceptrice dans ledit état choisi, et
- dans une septième étape on autorise la station réceptrice placée dans l'état choisi à réitérer les troisième et quatrième étapes, de sorte que la synchronisation puisse être relayée (ou diffusée). Cette étape se fait de façon récursive dans les stations esclaves après obtention de leur synchronisation (ou calage temporel).

Le procédé pourra comprendre également les étapes de recherche des fréquences d'émission des messages de synchronisation et/ou les étapes d'émission des messages d'interrogation et/ou les étapes de resynchronisation qui ont été décrites précédemment en référence aux variantes d'installations.

Dans ce qui précède on a parlé de stations équipées de modules et autres moyens. Ces modules et moyens doivent être compris aussi bien en tant que composants électroniques spécifiques (ou circuits) qu'en tant que procédures programmées.

L'invention ne se limite pas au mode de réalisation décrit ci-avant, seulement à titre d'exemple, mais elle s'étend aux variantes, d'installations comme de procédés, que pourra développer l'homme de l'art dans le cadre des revendications ci-après.

Ainsi, on a décrit une installation dans laquelle les informations relatives à la fréquence commune, contenues dans les messages de synchronisation, comprennent la liste des fréquences du schéma d'évolution de la fréquence commune et les durées de séjour respectives de ces fréquences. Cependant, les informations relatives à la fréquence commune pourraient ne comprendre qu'un identifiant de liste de fréquences et de durées associées, les stations relais comportant alors une mémoire dans laquelle se trouve stockée une table de correspondance entre des identifiants de liste et des listes et durées.

Par ailleurs, on a décrit une installation comportant un unique réseau. Mais, l'invention s'applique également aux installations comportant plusieurs réseaux identifiables par exemple par un même numéro et fonctionnant selon des synchronisations éventuellement différentes.

## Revendications

1. Installation de transmission de données, comprenant des stations relais (SHj,Sj-i) munies chacune d'un numéro de réseau (I_{I}) et comportant chacune une horloge (4) propre à définir un temps de référence local, et un module (3) propre à émettre/recevoir des messages sur une fréquence variant selon un schéma temporel choisi, défini relativement au temps de référence local, et un module de gestion (5) propre à former lesdits messages à émettre et à traiter lesdits messages reçus,
caractérisée en ce que le module de gestion (5) de chaque station relais (SHj, Sj-i), placée dans un état choisi, est agencé pour former des messages de synchronisation comportant son numéro de réseau (I_{I}) et des informations relatives audit état choisi et destinés à certaines autres stations relais, l'une au moins desdites stations relais (SH1), dite "station maître", présentant un module de gestion (5) demeurant en permanence dans ledit état choisi,
et en ce que chaque station relais (SHj,Sj-i) comporte un module de synchronisation (7) propre à réception d'un message de synchronisation contenant un numéro de réseau conforme à celui de la station qui l'héberge, à en extraire les informations d'état pour placer sa station relais dans ledit état choisi.

2. Installation selon la revendication 1, caractérisée en ce que les informations relatives audit état choisi contenues dans les messages de synchronisation comportent au moins des informations relatives à un temps de référence commun et à une fréquence commune, et notamment représentatives du schéma temporel de ladite fréquence commune.

3. Installation selon la revendication 2, caractérisée en ce que chaque module de synchronisation (7) est propre à extraire d'un message de synchronisation, reçu par le module d'émission/réception (3) associé, les informations relatives à ladite fréquence commune et audit temps de référence commun, puis, d'une part, à caler le temps de référence local, défini par l'horloge (4), sur le temps de référence commun, et d'autre part, à fournir audit module d'émission/réception (3) lesdites informations relatives à la fréquence commune, ladite station relais étant dans ledit état choisi lorsque son temps de référence local est le temps de référence commun et que son module d'émission/réception (3) est propre à émettre/recevoir des messages sur ladite fréquence commune variant selon le schéma temporel de cette dernière.

4. Installation selon l'une des revendications 2 et 3, caractérisée en ce que lesdites informations relatives à la fréquence commune comprennent un identifiant de la liste des fréquences de son schéma d'évolution et des durées de séjour respectives de ces fréquences.

5. Installation selon l'une des revendications 2 et 3, caractérisée en ce que lesdites informations relatives à la fréquence commune comprennent la liste des fréquences de son schéma d'évolution et les durées de séjour respectives de ces fréquences.

6. Installation selon l'une des revendications 1 à 5, caractérisée en ce que lesdites stations relais sont connexes entre elles.

7. Installation selon l'une des revendications 1 à 6, caractérisée en ce que chaque station synchronisante (SHj,Sj-i) est agencée pour placer dans le message de synchronisation un identificateur spécifiant que ledit message est un message de synchronisation, et en ce que chaque module d'émission/réception (3) est agencé pour déterminer si un message contient un identificateur de message de synchronisation (I_{S}) et transmettre ledit message au module de synchronisation (7) lorsque tel est le cas.

8. Installation selon l'une des revendications 1 à 7, caractérisée en ce que ledit module d'émission/réception (3) de chaque station relais (SHj,Sj-i, quels que soient i et j, mais hormis SH1) est agencé pour se caler successivement sur les différentes fréquences prévues par son schéma d'évolution temporelle, pendant des durées prédéterminées, de façon à capter un éventuel message de synchronisation émis par une station synchronisante.

9. Installation selon l'une des revendications 1 à 8, caractérisée en ce qu'elle est propre à réunir des segments de réseaux.

10. Installation selon la revendication 9, caractérisée en ce que les segments de réseaux sont des segments de réseaux radio.

11. Installation selon la revendication 9, caractérisée en ce que les segments de réseaux appartiennent à des réseaux radio et filaire(s).

12. Installation selon l'une des revendications 10 et 11, caractérisée en ce que le format d'un réseau radio est choisi parmi au moins le format de la norme "HIPERLAN" et le format de la norme IEEE 802.11.

13. Installation selon l'une des revendications 11 et 12, caractérisée en ce que le format d'un réseau filaire est choisi parmi au moins les standards ISO pour les normes IEEE 802.3, 802.5 et 802.14.

14. Installation selon l'une des revendications 1 à 13, caractérisée en ce que le(s) réseau(x) est (sont) dit(s) à saut de fréquence.

15. Installation selon l'une des revendications 1 à 14, caractérisée en ce que le(s) réseau(x) est (sont) dit(s) à étalement de spectre à séquence directe.

16. Installation selon l'une des revendications 1 à 15, caractérisée en ce qu'elle est propre à attribuer auxdites stations relais (SHj,Sj-i), lors de leur mise en fonctionnement, leur numéro de réseau.

17. Installation selon l'une des revendications 1 à 16, caractérisée en ce que chaque module d'émission/réception (3) est agencé pour déterminer si un message contient un numéro de réseau conforme à celui auquel appartient la station relais qui l'héberge, et à transmettre ledit message au module de synchronisation (7) lorsqu'il y a conformité.

18. Installation selon l'une des revendications 1 à 17, caractérisée en ce que les modules de gestion (5) des stations relais placées dans l'état choisi (SHj,Sj-i) sont agencés pour émettre lesdits messages de synchronisation de façon spontanée.

19. Installation selon la revendication 18, caractérisée en ce que l'émission est sensiblement périodique.

20. Installation selon l'une des revendications 1 à 19, caractérisée en ce que le module de synchronisation (7) des stations relais (SHj,Sj-i), placées dans l'état choisi, est propre, à réception d'un message de synchronisation, à comparer son temps de référence local au temps de référence commun extrait des informations contenues dans ce message, et à recaler automatiquement son temps de référence local sur le temps de référence commun extrait lorsque ce temps de référence local est en retard sur ledit temps de référence commun.

21. Installation selon l'une des revendications 16 à 20, caractérisée en ce que les modules de gestion (5) des stations relais (SHj,Sj-i) sont agencés pour former des messages d'interrogation requérant l'envoi d'un message de synchronisation, et pour fournir à leur module d'émission/réception (3) lesdits messages d'interrogation en vue de leur émission,
et en ce qu'à réception d'un message d'interrogation, le module de gestion (5) d'une station placée dans l'état choisi (SHj,Sj-i) est propre à former un message de synchronisation muni de l'information spécifiant le numéro de réseau extrait dudit message d'interrogation par le module d'émission/réception (3), en vue de son émission.

22. Installation selon l'une des revendications 1 à 21, caractérisée en ce que ladite station synchronisante (SH1) est agencée pour placer dans le message de synchronisation une information spécifiant son statut de station synchronisante vérifiant en permanence ledit critère choisi (station maître).

23. Installation selon l'une des revendications 1 à 22, caractérisée en ce qu'elle comprend des moyens propres à désigner une station relais comme station synchronisante vérifiant en permanence ledit critère choisi.

24. Installation selon la revendication 23, caractérisée en ce que lesdits moyens de désignation sont propres à désigner une station relais comme station synchronisante auxiliaire vérifiant ledit critère choisi.

25. Installation selon l'une des revendications 23 et 24, caractérisée en ce que la désignation s'effectue lors de la mise en fonctionnement de la station relais concernée.

26. Installation selon l'une des revendications 24 et 25, caractérisée en ce que ladite station synchronisante auxiliaire est agencée pour former et émettre spontanément les messages de synchronisation en cas d'absence de message de synchronisation en provenance de la station synchronisante pendant une durée supérieure à un seuil choisi.

27. Installation selon la revendication 23, caractérisée en ce que lesdits moyens de désignation sont propres, en cas d'absence de message de synchronisation en provenance de la station synchronisante pendant une durée supérieure à un seuil choisi, à désigner une autre station relais comme station synchronisante auxiliaire vérifiant ledit critère choisi.

28. Installation selon la revendication 27, caractérisée en ce que ladite station synchronisante auxiliaire est agencée pour former et émettre les messages de synchronisation dès sa désignation.

29. Installation selon l'une des revendications 1 à 28, caractérisée en ce que les stations relais placées dans l'état choisi sont agencées pour placer dans le message de synchronisation des données complémentaires choisies, en particulier un numéro de séquence.

30. Installation selon l'une des revendications 1 à 29, caractérisée en ce que le module de gestion (5) de chaque station relais (SHj, Sj-i) qui n'est plus placée dans ledit état choisi, est agencé pour former lesdits messages de synchronisation accompagnés d'une donnée auxiliaire propre à signaler que la station émettrice n'est pas dans ledit état choisi, mais dans un état dit "provisoire", en ce que le module de gestion (5) de chaque station relais (SHj, Sj-i) placée dans ledit état choisi est agencé pour former lesdits messages de synchronisation accompagnés d'une donnée auxiliaire propre à signaler que la station émettrice est dans ledit état choisi, et en ce que le module de synchronisation de chaque station relais (SHj,Sj-i) est propre à réception d'un message de synchronisation à en extraire la donnée auxiliaire et décider de le prendre en compte en fonction de l'état qu'elle représente.

31. Procédé de transmission de données, entre des stations relais comportant chacune un numéro de réseau et émettant/recevant sur des fréquences variant selon un schéma temporel choisi, comportant les étapes suivantes :
1) attribuer à chaque station un temps de référence local,
2) rapporter le schéma temporel de chaque station à son temps de référence local,
caractérisé en ce qu'il comprend en outre les étapes suivantes :
3) former en une station relais placée dans un état choisi un message de synchronisation comportant son numéro de réseau et des informations relatives à une fréquence commune, et notamment représentatives de son schéma temporel, et d'un temps de référence commun,
4) procéder à l'émission par cette station, en direction d'au moins une station relais réceptrice, dudit message de synchronisation,
5) extraire dans la station réceptrice les informations relatives à la fréquence commune, contenues dans le message de synchronisation, lorsque celui-ci contient un numéro de réseau conforme à celui de ladite station réceptrice,
6) caler le temps de référence local de cette station réceptrice sur le temps de référence commun et appliquer le schéma temporel de la fréquence commune à l'émission/réception de ladite station réceptrice, de manière à placer ladite station réceptrice dans ledit état choisi, et
7) autoriser la station réceptrice placée dans l'état choisi à réitérer les étapes 3) et 4).
